(19) **Europäisches Patentamt**

**European Patent Office**

**Office européen des brevets**

(11) **EP 0 741 290 B1**

(12) **EUROPEAN PATENT SPECIFICATION**

(45) Date of publication and mention
of the grant of the patent:
**15.03.2000 Bulletin 2000/11**

(51) Int Cl.[7]: **G01N 21/89**, D06H 3/12

(21) Application number: **95440024.8**

(22) Date of filing: **04.05.1995**

(54) **Method and apparatus for determining the distortion angles on moving fabrics or the like**

Verfahren und Vorrichtung zur Feststellung der Verzugswinkel in einer Textilbahn

Procédé et dispositif pour mesurer les angles de distortion d'une bande de tissu

(84) Designated Contracting States:
**AT BE CH DE DK ES FR GB GR IE IT LI LU MC NL PT SE**

(43) Date of publication of application:
**06.11.1996 Bulletin 1996/45**

(73) Proprietors:
- **Mahlo GmbH & Co. KG**
  **93342 Saal (DE)**
- **LEGLER S.p.A.**
  **24040 Frazione Crespi d'Adda (Bergamo) (IT)**
- **LEGLER INDUSTRIA TESSILE S.p.A.**
  **24036 Ponte San Pietro (Bergamo) (IT)**

(72) Inventor: **Vercruysse, Michel**
**F-68350 Brunstatt (FR)**

(74) Representative:
**Bohnenberger, Johannes, Dr. et al**
**Meissner, Bolte & Partner**
**Postfach 86 06 24**
**81633 München (DE)**

(56) References cited:
**EP-A- 0 262 525**     **EP-A- 0 505 760**
**EP-A- 0 543 629**     **GB-A- 2 224 831**
**US-A- 4 833 957**     **US-A- 5 301 129**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention concerns detecting, locating and estimating faults in a moving structure, more particularly a continuous web structure like textile, and discloses a method and an apparatus for determining the distortion angles of a moving textile, either a woven or knitted or tufted textile fabric.

Weft and end yarns of woven fabric, at loom output machine, have a particular property, they are perpendicular. However, during finishing processes, this orthogonality is destroyed leading to textile distortion. The same phenomenon does also appear with knitted or tufted fabrics.

Nevertheless, textile manufacturers have to respect limits of distortions. Moreover as these limits are standardized, robotic machines called automatic straightners are used, for which distortion angles are the measurement parameters.

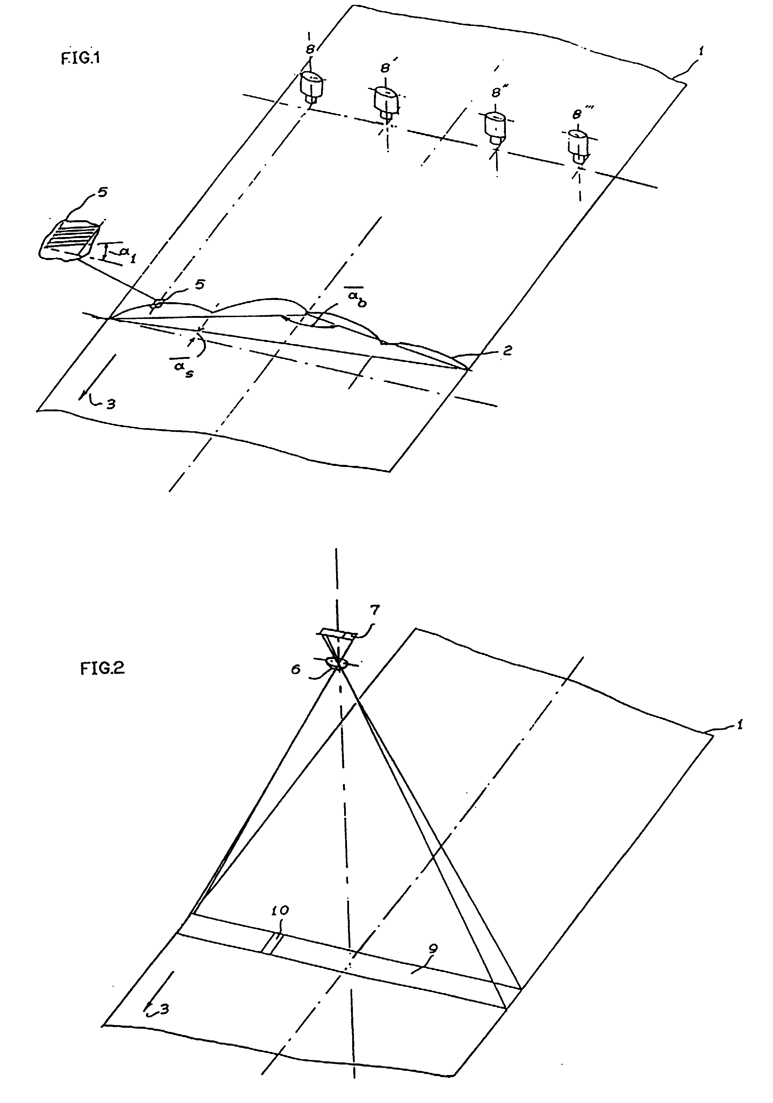

With reference to figure 1 of the accompanying drawings, the definition of the distortion angles of a textile is clearly depicted. The represented perspective view shows a cloth 1, moving in the direction indicated by 3, which has in this example a so-called garland weft distortion 2. The angles $\bar{\alpha}_s$ and $\bar{\alpha}_b$ are the so-called skew angle distortion and bow angle distortion respectively.

The principle of measurement of $\bar{\alpha}_s$ and $\bar{\alpha}_b$ which is applied at present by all manufacturers of automatic straightners, consists to position several local detectors across the fabric width. A practical example of such an arrangement is given in figure 1, where an array of detectors 8 is shown. Once local weft distortion angles of which one example is indicated by $\alpha_1$ are determined, $\bar{\alpha}_s$ and $\bar{\alpha}_b$ are computed by using following equations:

$$\overline{\alpha_s} = \frac{1}{N} \sum_{i=1}^{N} \alpha_i$$

$$\Delta = \frac{1}{N/2} \sum_{i=1}^{N/2} \alpha_i - \frac{1}{N/2} \sum_{i=N/2+1}^{N} \alpha_i$$

$$\overline{\alpha_b} = \text{sign } \Delta \; |\pi - |\Delta||$$

where $\alpha_i$ is the local distortion angle, whose value is determined locally by each of the detectors respectively and N is the total number of detectors (4 in the example of figure 1)

This known principle of measurement using local detectors has two main drawbacks.

The first one is due to the fact that each detector estimates the local distortion angle $\alpha_i$ only on a small part of the fabric width (about 20 mm). It is easy to understand that if the distortion of the textile is irregular, for instance like a wave or snake form or a garland one, as depicted by 2 in figure 1, the estimation of the distortion angles is biased and can be completely erroneous.

Indeed, the measurement depends basically on the position and on the total number of the detectors. As textile distortions are in general of great variability, this dependency leads to problems and to a lack of reliability.

From the technical point of view, if one considers the fill factor which is defined by the ratio of detection width upon cloth width, it has to be noted that for a 1600 mm cloth width and using four detectors (which is usual), with for example 20 mm detection length each, the fill factor is only 0,05, and the results of the measurement made under such circumstances cannot provide accurate and reliable indications of the status of the whole textile fabric.

The second main drawback is connected with the structure and the constitution of the detectors used which are generally based on oscillating (or rotating) photodiodes involving mechanical elements which abrasion and wearing may lead to wrong measurements and needs constant maintenance.

The same problems raise on systems based on nuclear magnetic resonance techniques, in which certain parts of the detection heads are mechanically driven.

To remedy this last kind of problem, it has been proposed a system which employs at least one CCD linear array (charge coupled device) and which is described in DE 37 17305.

Beyond the fact that this last device is a local detector (length of measurement being less or equal to the length of the CCD array), when using one CCD, it must be noted that the method is parametric because it is based on a direct trigonometric formulation.

Moreover, mathematical difficulties are to be expected (depending on the position of the weft) which can be practically insurmountable. Thus two linear CCD (or matrix array) are proposed for each detector, which increases the costs of such a system, with solving the aforesaid problems.

EP-A-0 262 525 and EP-A-0 505 760 disclose methods of determining distortion angles of a textile fabric by illuminating an elongated area of the textile fabric and measuring the light transmission. The angular position of the illuminated elongated area is changed and transmission signals measured for these different positions are used for calculating a distortion angle.

Another system, although not directly related to distortion angle measurement, has also been developed using a CCD matrix camera with a stroboscopic infrared light source. To obtain the local distortion angle, the cross correlation between two vertical lines is performed.

But this system too is comprised of one or several local detectors which have very small view fields and can only provide reliable fragmentary results.

Therefore, from a structural point of view, all the systems of the prior art described herebefore are based upon using a limited number of physical local detectors, leading to the limitations and the problems cited.

From a processing point of view, all these existing systems, not only these employing oscillating photo diode or shunt coil sensor but also the ones using video sensors, involve processing techniques which are basically mono-dimensional. Due to this particular character, estimation of local distortion angle may be, itself, also biased especially when the textile texture has a complex weave, leading to other types of problems.

It is one of the main objects of the present invention to overcome in particular all the aforementioned limitations and drawbacks.

Therefore and according to the present invention, there is provided a method for determining the distortion angles of a moving textile fabric, cloth or the like, characterized in that it consists of forming a real image of the textile, fabric or cloth, illuminated by at least one light source, sampling the said image to form images of successive rectangular shaped areas, transverse to the moving direction of the textile fabric, cloth or the like digitizing and storing the corresponding image signals, dividing the said images into rectangular shaped tiles, calculating then for said tiles local distortion angles by way of a bi-dimensional image transformation of at least part of the aforesaid tiles and determining skew and bow distortion angles of the textile fabric, cloth or the like from the local distortion angles calculated for each said tile.

The said tiles may be regularly distributed over the whole width of the textile fabric. They can even be adjacent one to another, and form together a continuous image of a transverse rectangular area of the cloth, fabric or the like.

But the said tiles may also be irregularly distributed across the width of the cloth or fabric and may be closer together, possibly adjacent, in predetermined transverse positions corresponding to longitudinal areas of the cloth or fabric where greater or particular distortions are expected.

In order to facilitate the image transformation and to increase the quality of the results, an image enhancement is advantageously performed prior to texture modelling, in form of a line convolution, a Laplacian or high pass spatial frequency filtering.

A better efficiency in treatment and real time working can be achieved by providing that during local angle calculation and computing global distortion angles, namely the skew and bow distortion angles, of one rectangularly shaped transverse extending area of the fabric or cloth, the image of the following adjacent similar rectangular shaped area of the cloth or fabric is sampled, digitized and stored.

According to a first embodiment of the invention the used image transformation, for each tile, consists of a spectral transformation, the local distortion angles being estimated by a regression of first order, possibly after a spatial frequency filtering. In this case, after a possible image enhancement processing, a bi-dimensional power spectrum by ways of a bi-dimensional spectral transformation is obtained and the points representing the weft texture are linked to the center of the referential using line regression, in order to define the local distortion angle, the spectral transformation being preferably a bi-dimensional Fourier transform.

According to a second embodiment of the invention, the used image transformation, for each tile, consists of a spatial polar transformation, the local distortion angles being estimated in the spatial polar domain by a maximum or barycenter computation, preferably after low pass frequency filtering. In this case, after a possible image enhancement processing, the spatial position of the weft structure, in each tile, is extracted using a line detector, by integrating the grey levels along half scan lines with different orientations ($\theta i$) within an angular region whose angle is ($\gamma$), and then forming a texture signal consisting of the different average grey levels for each orientation ($\theta i$) and defining the envelope and/or the variance of this signal together with the corresponding maximum or barycenter which indicates the position of the weft texture on the considered tile. Preferably, the integration of the aforesaid grey levels and the forming of the texture signal is worked out using an adapted Hough transformation, the envelope of the texture signal being sampled using a differential low pass digital filter, before determining the barycenter by computation in the spectral domain.

According to a supplemental feature of the invention, a counting of the maxima of the signal amplitude in the length direction across the whole width of the fabric or cloth, or comprised within a predetermined transverse length, is performed, for instance by filtering the aforesaid texture signal by a high pass digital filter and then passing the filtered signal through a period counter, thereby enabling the determination of the picks or the yarns per unit of length of the textile fabric or cloth.

In order to be able to perform the same accuracy in measurement whatever the circumstances of running of the fabric or cloth are, a constant resolution may be maintained in the vertical or running direction of the textile fabric or cloth, indepedently of the speed of movement of the textile, by using a space or length measuring encoder.

The present invention also concerns an apparatus arranged to perform the method described herein before, comprising lighting means to illuminate the textile fabric or the like, at least one optical system which forms an image of the textile fabric or the like, at least one light sensitive sensor arranged to sample the said image(s) and to form images of successive transverse rectangular areas of said textile fabric or the like, an analog-to-digital converter for digiting the output signals of said light sensitive sensors and a vision computer or the like, equiped with a frame memory in which the digitized image is stored and with a processor unit arranged to process the digitized image.

For realising real time processing and forwarding corresponding results, the vision computer incorporates advantageously digital signal processors, preferably arranged in parallel structure.

Furthemore, the used light sensitive sensor is preferably comprised of an array of photoelements, for example a high speed line camera with high resolution.

In order to prevent any interferences and allow application of the apparatus in electromagnetic polluted environments, the video signal delivered by the light sensitive sensor is transmitted, if necessary, by way of optical fibers to a video receiver incorporated by the vision computer, the optical system forming the real image of the fabric or cloth cloth consisting of a photographic lens device.

If the width of the fabric or the like is very big or its thickness or complexity very high, the apparatus may comprise several sets of optical systems/light sensitive sensors, arranged side by side or situated on opposite sides of the moving fabric, cloth or the like.

The present invention further deals with a stenter machine or a similar construction for the treatment of a textile fabric or the like, characterized in that it incorporates at least one apparatus as described above, arranged to perform the aforementioned method, said at least one apparatus forming the detection, control and driving device of said stenter machine or similar construction.

As can be seen, the main application of the method and the apparatus of the present invention is to use the measurement (skew and bow angles) to make textile straightners automatic.

But other applications are possible, like using the measurement results for continuous textile inspection especially in order to be able to detect flaws which are oriented in the weft direction, for instance missing picks or double picks.

Yarns or picks may also be determined, once the sensor has been calibrated, and textile recognition is possible too.

This invention will be better understood thanks to the following description, based on preferred embodiments, shown and explained, as non limitative examples, by referring to the accompanying schematic drawings, wherein:

figure 1 is a perspective view of a cloth showing a so-called garland weft distortion type and a monitoring arrangement of the prior art;

figure 2 is a perspective view of a cloth which illustrates the method of the invention;

figure 3 is a block diagram of the apparatus according to the present invention;

figure 4 shows a flow diagram of the processing steps for determining the distortion angles of a textile fabric according to the invention;

figure 5 is a block diagram of the processing steps of the first embodiment of the method for determining the distortion angles of a textile fabric according to the invention;

figure 6 is a schematic spectrum diagram of a serge weave textile fabric;

figure 7 shows a tile of the image of the textile fabric or cloth with encoded half scan lines with orientation $\theta i$, used during the second embodiment of the method according to the invention;

figure 8 is a block diagram of processing steps according to the second embodiment of the method in order to determine the local distortion angle;

figure 9 shows a signal texture and its envelope using the spatial transformation according to the second embodiment of the method of the invention;

figure 10 shows a local weft distortion with the corresponding sampled envelope of the texture signal used in the second embodiment of the invention;

figure 11 is a block diagram of processing steps in order to determine the picks count or the stitch density according to a supplemental feature of the invention;

figure 12 shows texture signal before and after filtering, obtained according to the second embodiment of the invention, and,

figure 13 is a block diagram of a stenter machine incorporating an apparatus according to the present invention.

With reference to figure 1, the so-called skew distortion angle indicated by $\overline{\alpha}_s$ and bow distortion angle indicated by $\overline{\alpha}_b$ define commonly parameters measurement of the global distortion of a textile fabric whereas $\overline{\alpha}_i$ is the local distortion angle of the part of the fabric indicated by reference 5.

In view of a better understanding of the working of the method of the present invention, there is given hereunder a short explanation of the theory on which the invention is based.

Considering I being the background intensity, $\Delta I (x, y)$ its variation at coordinates x, y, the mathematical (potential)j type flaw representation has been defined:

$$V^{j}_{x_n,y_n} = \int\int_{o}^{[L*H]^{\alpha_j}_{x_n,y_n}} \Delta I(x,y)\ dx\ dy$$

with

L,H        be respectively lenght and height of flaw of type j
$\alpha_j$        be its orientation
$x_n, y_n$        be the coordinates of the flaw j

Estimation of $V^{j}_{x_n,y_n}$ (numerical computation) is:

$$V^{j}_{x_n,y_n} = \sum^{[L,H]^{\alpha_j}_{x_n,y_n}} \Delta I_{(l,h)}$$

where $\Delta I_{[l,h]}$ be I variation between two adjacent sampling windows of dimensions l, h, sub-multiple of L, H (Shannon sense).

This formulation indicates clearly that flaw detection depends on several parameters, one of which is a that is flaw orientation.

If a is obvious for flaw in end direction, in the weft direction $\alpha_j$ has to be estimated due to its variability.

Flaws like missing weft, double pick, loomstop, thick place, coarse pick, long filling slub, jerk in and harness balk (first and second aspect) are flaws oriented in the weft direction. Thus a specific research had to be made to estimate $\alpha$, that is the so-called skew of the textile material.

With reference to figure 2, and in accordance with the present invention, an optical system 6 forms a real image of the fabric or cloth 1. A light sensitive sensor samples this said image in order to build an effective image 7 of a rectangular area 9 of the textile fabric which moves continuously. Arrow 3 indicates the running direction, which can be reversed.

In one particular embodiment, there has been chosen a standard photographic objective to form the image and a high speed line camera with a great number of pixels to sample it, in order to have a sufficient spatial resolution in both directions, the horizontal one (perpendicular to the moving or running direction) and the vertical one (parallel to the moving or running direction).

It is to be understood that whatever the type of the sensor (line or matrix array) is which may be used, the type which has been indicated is merely illustrative of one embodiment of the apparatus of the present invention. Clearly matrix cameras equipped with mechanical or electronic high speed shutter may be used to sample the total width of the fabric instead of line cameras.

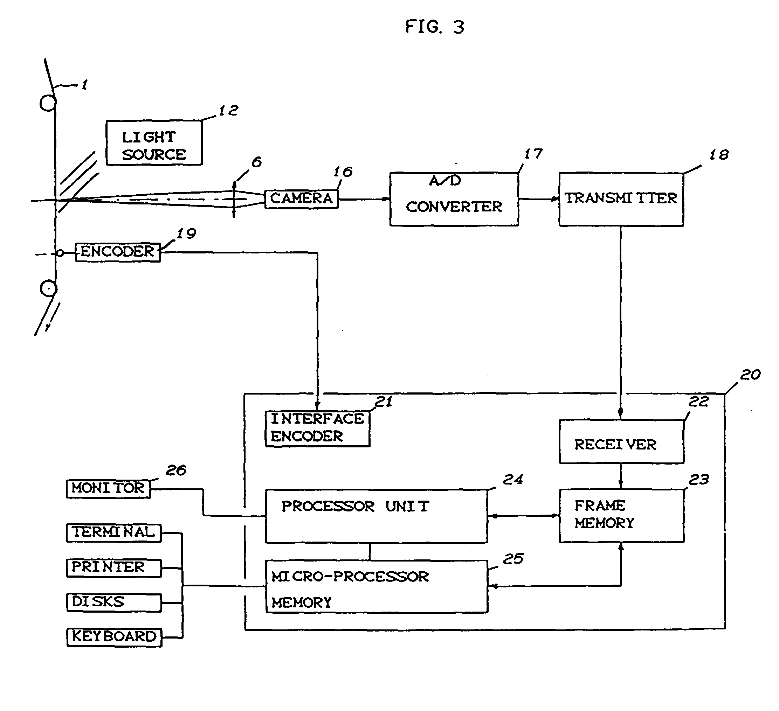

Referring now to figure 3, it can be seen that the video signal delivered by the line camera is digitized by the analog-digital converter 17 and transmitted by the transmitter or transmission line 18 to the vision computer 20 which incorporates a video receiver 22. Such a transmission line 18 or transmitter is not necessary when camera 16 and vision computer 20 are combined in the same device.

The image of a rectangular area of the fabric 9 is then stored in a frame memory 23 shared by a processor unit 24 which performs the digital image transformation and processing.

A micro-processor 25 is used as controller of all the apparatus functions and a monitor 26 may be used to visualize the fabric image and the estimated distortion angles graphically.

An encoder 19 may be used to maintain a constant resolution in the running direction whatever the running speed of the fabric or cloth is.

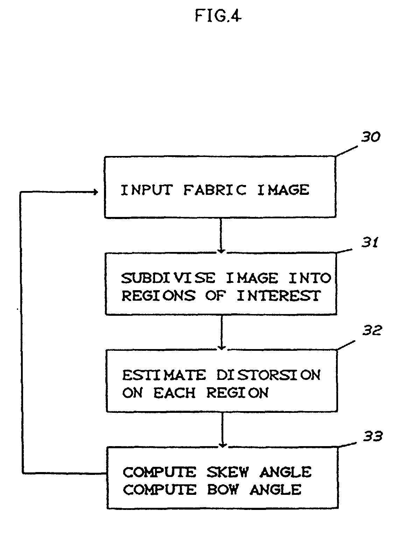

A flow chart of processing steps executed by the processor unit 24 is shown in figure 4.

The images of successive rectangular areas of the fabric are divided into tiles 10 or so-called regions of interest (ROI), as indicated in box 31.

The tiles 10 are normally regularly distributed across the width of the cloth or fabric and may be adjacent one to another, in order to form together a continuous image of a transverse rectangular area of the cloth or fabric. In this last case the fill factor is one and thus optimal.

But the said tiles may also be irregularly distributed across the width of the cloth or fabric and may be closer together, possibly adjacent, in predetermined or dynamically determined transverse positions corresponding to longitudinal areas of the cloth or fabric where greater or particular distortions are expected.

The dynamically determination or the positions of the tiles allows to concentrate the calculation resources on the really distorted areas, which may change, during process, for the same web.

Concerning the dimensions of the tiles or ROI (in pixels), it is obvious that a compromise is to be found between big and small areas of these ROIs. With big ROI, weft texture is more visible leading to a higher ratio signal to noise, while small ROI better samples irregular weft distortion like snake form.

Once the image is divided into tiles or ROIs, the distortion angle is estimated for each ROI, as indicated in box 32.

Finally, skew and bow angles are computed as indicated in box 33.

According to an advantageous feature of the invention, it may be provided that during local angle estimation and computing global distortion angles of one rectangularly shaped transverse extending area of the fabric or cloth, the image of the following adjacent similar rectangular by shaped area of the cloth or fabric is sampled, digitized and stored.

To further reduce processing time in order to calculate in real time the distortion angles, fast processors may be used. In one particular embodiment of the invention, digital signal processors have been used arranged in parallel structure.

The steps of the method described above demonstrate clearly that, instead of using physical local detectors, the apparatus implements virtual local detectors, the position, the number and the dimensions of which are fully programmable, so that a greater adaptability to irregular distortions is performed. Morevoer, greater accuracy may be obtained due to the number of virtual detectors which may be implemented. Optimality is reached when the width of the fabric or cloth is totally covered by adjacent tiles or regions of interest (ROI), leading to a fill factor equal to one.

In accordance with the present invention, the digital image processing will now be described the function of which is to estimate for each tile or ROI the local distortion angle.

By way of examples, two methods will be described, both involving image processing techniques i.e. image transformation in order to modellize the weft texture of the textile.

These modelling techniques give a concise representation of the textile texture which is by nature structural. It means that periodicities are existing for such texture, more particularly for the weft texture.

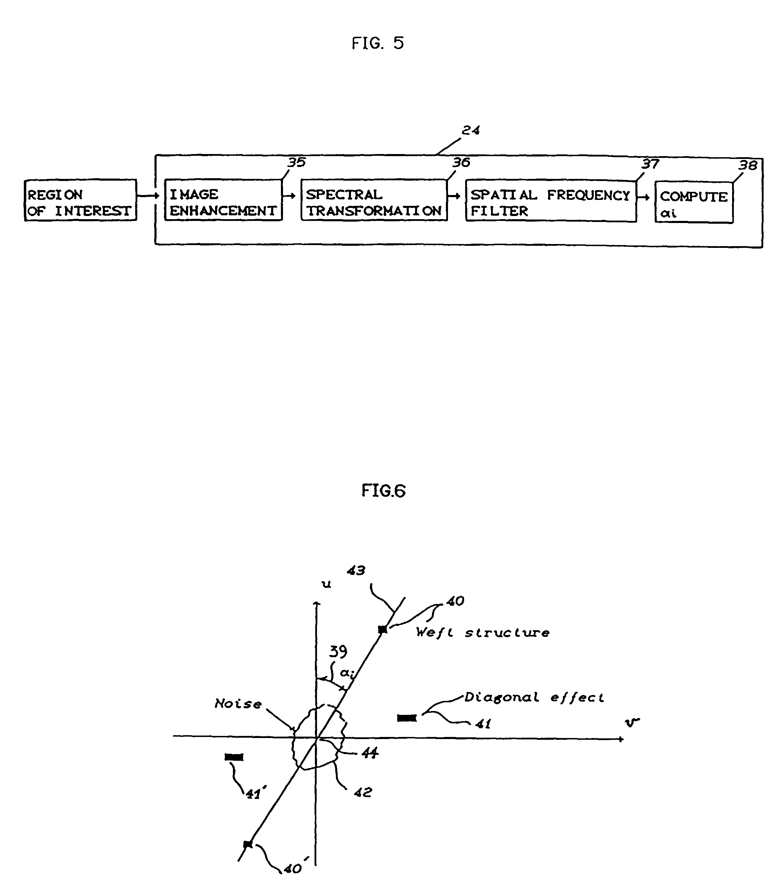

Figure 5 of the drawings shows a block diagram of the processing steps of a first embodiment of the image transformation and distortion angle computing used in the method according to the invention.

As indicated in box 35, an image enhancement may be performed to eliminate electronic noise or to enhance the weft texture by a line convolution for instance; so that a higher texture signal on noise ratio may be obtained which can be necessary for noisy textile textures. As indicated in box 36, it is followed by a spectral transformation. Namely bi-dimensional Fourier transform, Hadamard or others may implement this transformation. In one practical embodiment, bi-dimensional Fourier transform has been used due to the fact that fast Fourier transformation (2D FFT) algorithms are available, reducing computation time.

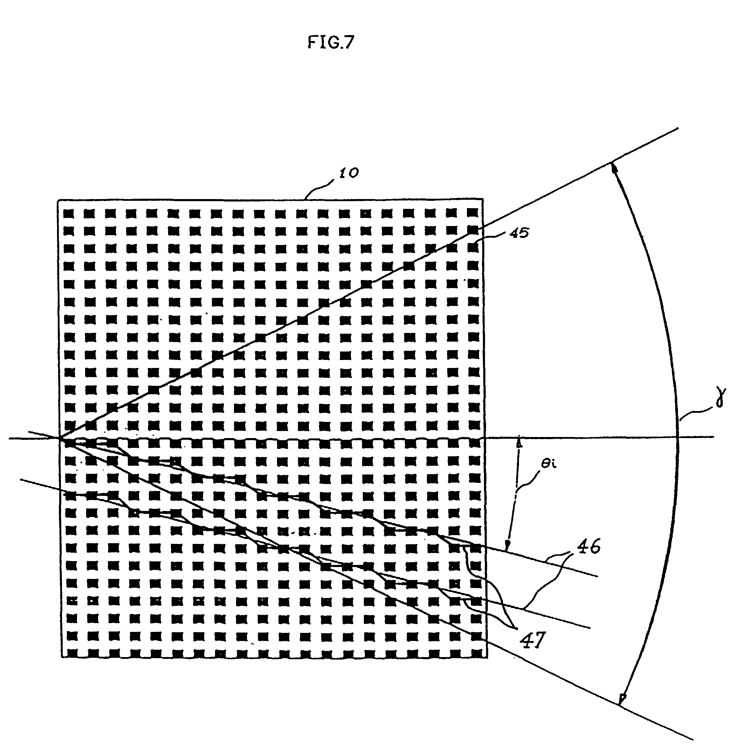

In figure 6, there is represented schematically a bi-dimensional spectrum diagram of a so-called denim textile. The two points indicated by 40 and 40' are the concise representation of the weft texture due to properties of the bi-dimensional spectral transformation used.

Indeed, the working principle used is the monitoring of the diffraction spectrum of the textile surface (object plane) obtained by a Fourier transform (FT) due to the specific properties of FT, namely translation and rotation.

Thus, if f(x, y) is the image function of F (u,v), its Fourier transform, it is known that:

$$f(x-x_o, y-y_o) \longleftrightarrow F(u,v) \exp[-j2\pi(ux_o+vy_o)/N].$$

Furthermore, in polar coordinates, it is known that:

$$f(r,\theta+\alpha) \longleftrightarrow F(\omega, \phi+\alpha).$$

Due to these two properties, FT extracts and separates all the existing textures in an image.

The angle as indicated by 39 is the local distortion angle $\alpha_i$ that is searched.It is also noticeable that points 41 and 41' represent the weave effect of the denim texture whereas the noisy information of the image (considered as such) is indicated by 42.

This noise may be eliminated by a simple spatial frequency filter as indicated in box 37.

Linking the points 40, 40' and the center 44 of the referential using a line regression, angle $\alpha_i$ may be afterwards easily determined as indicated in box 38.

The second embodiment of the image transformation and distortion angle computing is based on a spatial transformation.

The basic idea of this second embodiment is to extract the spatial position of the weft texture using a line detector. It is based upon integration of the grey levels along some half scan lines with different orientations within an angular region.

To illustrate this second embodiment, figure 7 shows a tile 10 or ROI materialized by a matrix of pixels, one of which is indicated by reference 45.

Within the angular region indicated by $\gamma$, half scan lines are generated and encoded, this for each degree angle. As examples, reference 46 indicates two half scan lines with orientation $\theta i$ encoded as indicated by reference 47.

The grey levels of all the pixels which are located on the said encoded lines are summed, the sum being finally divided by the total number of pixels contained within each of said lines, in order to get thus the corresponding average grey level of each scan line. This approach is an adaptation of the well known Hough transformation.

It must be noted here that the value of $\gamma$ and the position of $\gamma$ relative to axis, are programmable which is an advantage to the existing mechanical oscillating systems the scanning angle of which is limited.

A so-called "texture" signal is obtained for each $\theta i$ if several adjacent half scan lines with orientation $\theta i$ are generated and encoded.

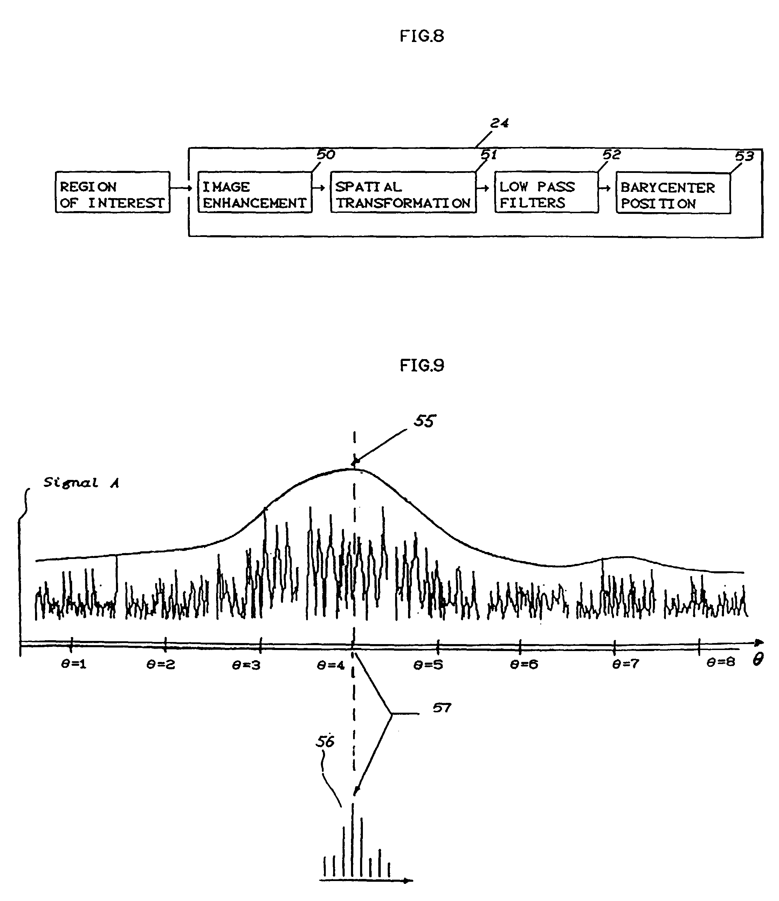

Figure 8 of the drawings shows a block diagram of the processing steps performed by processor unit 24 when working of this second embodiment of the method according to the invention.

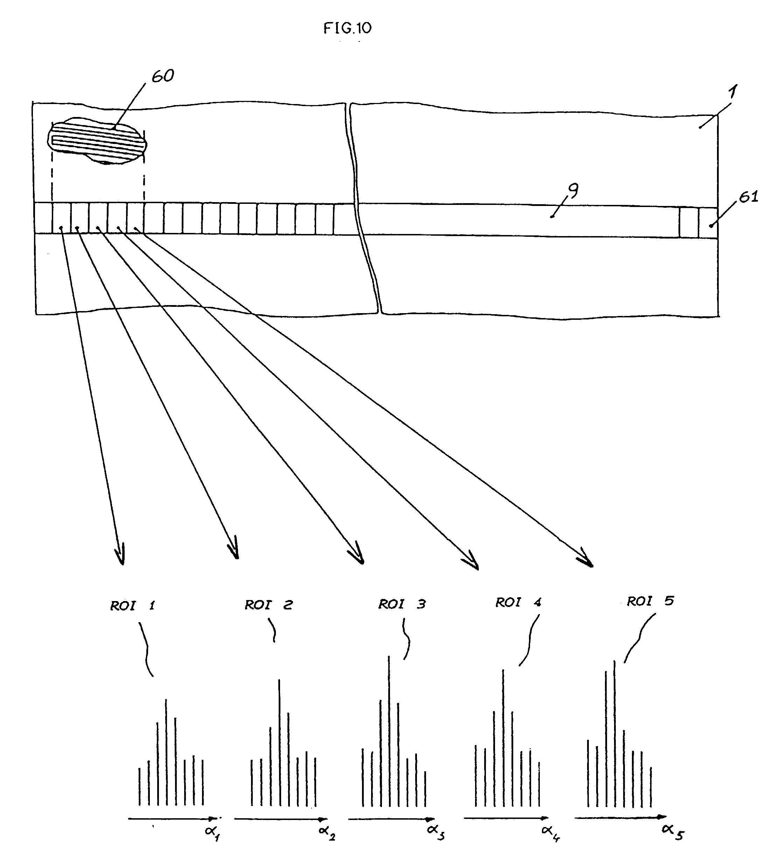

With reference to figure 9, a texture signal (output of box 51) is to be seen as indicated by signal A obtained by 8 orientations as indicated by the $\theta$ axis.The envelope (and/or the variance) of the signal A is of particular importance. The maximum of amplitude indicated by reference 55 gives the spatial position of the weft texture.

As we deal with digital technique, the envelope is obtained and sampled with low pass digital filters as indicated by box 52.

Once the sampled envelope 56 is obtained, the determination of the barycenter (box 53) on the $\theta$ axis gives the position of the weft texture as indicated by reference 57, i.e. the local distortion angle is thus determined.

Image pre-processing (box 50 on figure 8) may be used to enhance preferably line texture. In one practical embodiment of the invention, line convolution has been used. Laplacian, high pass spatial frequency filter or the like may also be used.

Figure 10 shows a cloth 1 on which a rectangular area 9 has been divided into adjacent tiles or regions of interest as indicated by ROI 1, ROI 2, ROI 3, ROI 4 and ROI 5 for the first, while the last ROI is indicated by 61.

Figure 10 shows also a local regular weft distortion 60 and the corresponding representation given by the sampled envelopes of the texture signals on which the local textile distortion angles are computed by their barycenter position on $\alpha$ axis. Once all the tiles ROIs have been processed, the distortion angles of the fabric may be thus estimated with a fill factor equal to one, which is in this case optimal.

According to a supplemental feature of the invention, stitch density or picks count may also be determined by the apparatus

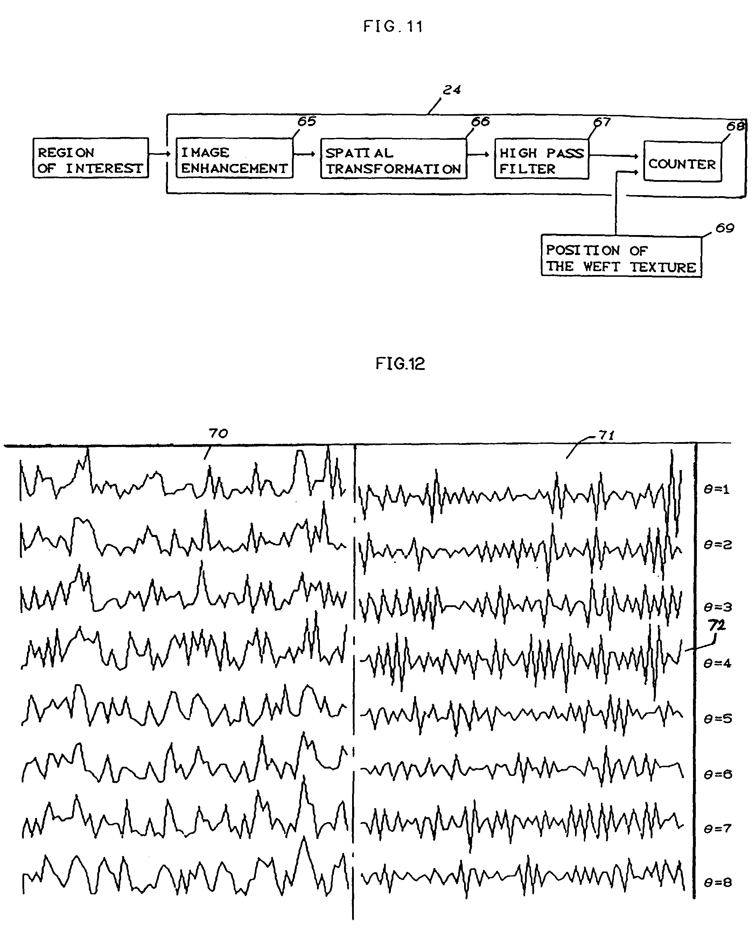

As an example therefore, figure 11 shows the block diagram of the processing steps which may be performed by processor unit 24. to reach this result.

The texture signal is filtered by a high pass digital filter (box 67) followed by a periodicities counter (box 68).

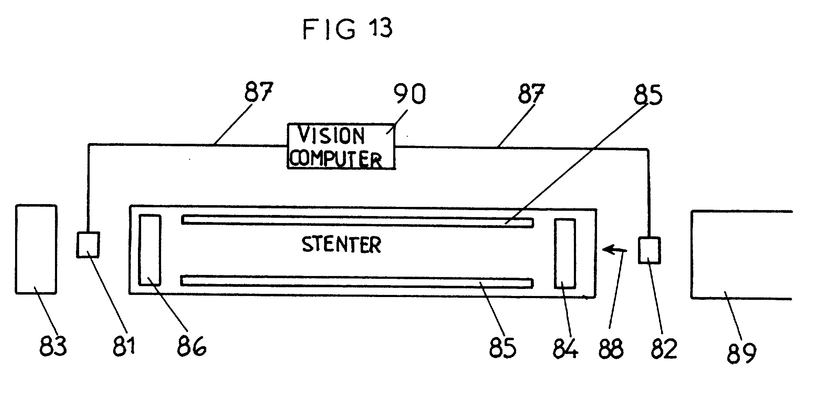

Figure 12 of the accompanying drawings gives examples of texture signals 70 at the output of box 66 which is the spatial image transformation described above, while reference 71 shows the filtered texture signal which is the output of box 67 (figure 11).

The position of the weft texture ($\theta=4$ in out above example) being determined either with the spectral or the spatial transformation (box 69), the number of picks per length unit may be determined by counting the number of periods included in the weft texture signal indicated by reference 72, once the camera or the corresponding array of photoelements has been calibrated. In a preferred embodiment, a contrast enhancement has been implemented for the pre-processing function (box 65 in figure 11).

It has been described that using spectral and/or spatial image transformations, weft texture can be represented in a concise manner in order to determinate the local distortion angle. It is of course possible to combine both methods to increase the texture signal on noise ratio.

All image processing used in the present invention can be programmed by a skilled person in the programming art, so that an explicit program will not be described herein.

Within the scope and the working of the present invention, the measurement of the distortion angles may use either reflection mode (camera and light are on the same side) or light transmission mode (camera and light source are on opposite sides of the fabrics).

Furthermore, different light sources, preferably long life sources, may be used with corresponding type of light drivers which have to be used to eliminate the flicker effect. Standard fluorescent tubes, for instance, may be driven with high frequency electromagnetic field.

Halogen lamps may be also used. However, if the running speed is high, a direct current driver can be used.

Arc lamps may be driven either with direct current or high frequency driver.

The method and apparatus described herein before are advantageously used in association with automatic textile straighteners, but also in material identification or in connection with towelling or printed material measurement or recognition.

The main advantages of the method and the apparatus of the invention are listed herein after:

- Software heads

At date, several heads (physical ones) are positionned across the textile. According to the method of the invention, virtual heads can be implemented by the provision of tiles or ROI (region of interest), thereby giving high flexibility.

-Greater accuracy

At date, 4 heads are generally used for 1600 mm width. Using the cutting up into ROI, the number of heads can be virtually doubled (i.e. tripled..) so that accuracy of skew estimation is greater, especially for complex distortions like wave distortions.

- Bi-dimensional processing

At date, due to the detector based on photo cell, mono-dimensional signal processing can only be used to increase ratio Signal/Noise. For complex textile texture, skew determination becomes "extraction of not known signal in noise" which is not solved when ratio signal/noise is too low. Due to image processing according to the invention (bi-dimensional character), much higher performances are possible.

- Pattern recognition technique

For difficult cases (complex textile texture), the method of the invention can be implemented. After a learning phase, skew determination can be then performed, by ignoring the wanted texture or weft local modifications.

- No angle limitation

At date, each head detector uses a scanning slit (optical correlator). The angle of scanning is limitated (about 30°). Using the cutting up into ROI, angle limitation disappears, so that big distortions can be detected by the apparatus.

- Static detector

At date, each head has a motor (generally a step motor) so that mechanical means are needed with wearing parts. Moreover, motor gives noise in the signal detection (EMI); by using a camera, the detector is static and no mechanism is required.

The present invention also includes a new stenter machine or construction, as represented on figure 13 of the accompanying drawings, which incorporates at least one apparatus for continuous determining of the distortion angles of a moving textile fabric or cloth, this apparatus possibly incorporating several sets image forming means light sensitive sensor.

As can be seen on figure 13, the stenter machine is preceded by a straightner device 83 and followed by a cutting machine 88 and a rolling machine 89 and is mainly comprised of an input stenter roller 86, an output stenter roller 84 and two lateral clips 85 (pins).

The apparatus for determining the distortion angles and allowing yarns-counting is composed of a central vision computer 90, a first sensor/camera 81 to acquire the image of the textile fabric at the entrance of the stenter, a second sensor/camera 82 to acquire the image of the textile fabric at the exit of the stenter and transmission cables 87.

Among the main different functions which may be realised by this stenter machine, one can notice the followings:

- automatic skew and bow correction at the input by using items 81 and 83;
- automatic bow correction at the output by using items 82 and 84;
- automatic skew correction at the output by using items 82 and 85;
- yarns-count (stitch density) at the input by using item 81;
- yarns-count (stitch density) at the output by using item 82;
- determination of shrinkage by using items 81 and 82 together;
- automatic shrinkage adjustment by using items 81, 82 and 86;
- width determination by using item 82;
- estimation of weight pro linear meter by using item 82;
- automatic controlled cutting (knitted fabrics, toweling) by using items 82 and 88;
- forming and visualisation of real image of material by using items 81 and 82;
- output stenter control by using item 82;
- skew report;
- material identification.

The present invention is, of course, not limited to the preferred embodiments described herein before and represented on the accompanying drawings, changes can be made or equivalents used without departing from the scope of the invention.

**Claims**

1. Method of determining the distortion angles of a moving textile, fabric, cloth or the like, which comprises the steps of:

   - forming a real image of the textile, fabric or cloth, illuminated by at least one light source,

   - sampling the said image to form images of successive rectangular shaped areas, transverse to the moving direction of the textile fabric, cloth or the like,

   - digitizing and storing the corresponding image signals,

   - dividing the said images into rectangular shaped tiles (10),

   - calculating then for said tiles (10) local distortion angles by way of a bi-dimensional image transformation of at least part of the aforesaid tiles (10), and

   - determining skew and bow distortion angles of the textile fabric, cloth or the like from the local distortion angles calculated for each said tile (10).

2. Method according to claim 1, wherein the said tiles are regularly distributed over the whole width of the textile fabric.

3. Method according to any one of claims 1 and 2, wherein the said tiles are adjacent one to another, and form together a continuous image of a transverse rectangular area of the cloth or fabric or the like.

4. Method according to claim 1, wherein the said tiles are irregularly distributed across the width of the cloth, fabric or the like and are closer together, possibly adjacent, in predetermined or dynamically determined transverse positions corresponding to longitudinal areas of the cloth or fabric where greater or particular distortions are expected.

5. Method according to any one of claims 1 to 4, wherein an image enhancement is performed prior to texture modelling, in form of a line convolution, a Laplacian or high pass spatial frequency filtering.

6. Method according to any one of claims 1 to 5, wherein during local angle calculation and computing the skew and bow distortion angles of one rectangular shaped transverse extending area of the fabric or cloth, the image of the following adjacent similar rectangular shaped area of the cloth or fabric is sampled, digitized and stored.

7. Method according to any of claims 1 to 6, wherein the used image transformation, for each tile, consists of a spectral transformation, the local distortion angles being estimated by a regression of first order, possibly after a spatial frequency filtering.

8. Method according to claim 7, wherein, after a possible image enhancement processing, a bi-dimensional power spectrum by ways of a bi-dimensional spectral transformation is obtained and the points representing the weft texture are linked to the center of the referential using line regression, in order to define the local distortion angle.

9. Method according to any of claims 7 and 8, wherein the bi-dimensional transformation is a bi-dimensional Fourier transform.

10. Method according to any one of claims 1 to 6, wherein the used image transformation, for each tile, consists of a spatial polar transformation, the local distortion angles being calculated in the spatial polar domain by a maximum or barycenter computation, preferably after low pass frequency filtering.

11. Method according to claim 10, wherein, after a possible image enhancement processing, the spatial position of the weft structure, in each tile, is extracted using a line detector, by integrating the grey levels along half scan lines with different orientations ($\Theta i$) within an angular region, and then forming a texture signal consisting of the different average grey levels for each orientation ($\Theta i$) and defining the envelope and/or the variance of this signal together with the corresponding maximum or barycenter which indicates the position of the weft texture on the considered tile.

12. Method according to claim 11, wherein the integration of the aforesaid grey levels and the forming of the texture signal is worked out using an adapted Hough transformation.

13. Method according to any one of claims 11 and 12, wherein the envelope of the texture signal is sampled using a differential low pass digital filter, before determining the barycenter by computation in the spectral domain.

14. Method according to any one of claims 10 to 13, wherein a counting of the maxima across the whole width of the fabric or cloth or comprised within a predetermined transverse length, is performed, for instance by filtering the texture signal by a high pass digital filter and then passing the filtered signal through a period counter.

15. Method according to any one of claims 1 to 14, wherein a constant resolution is maintained in the running direction of the textile fabric or cloth, independently of the speed of movement of the latter, by using a length or space measuring encoder.

16. Apparatus arranged to perform the method according to any one of claims 1 to 15, comprising lighting means to illuminate the textile fabric or the like, at least one optical system (6) which forms, each, an image of the textile fabric or the like, at least one light sensitive sensor (16), and a vision computer (20) or the like,
**characterized in that**

  - the light sensitive sensor (16) is an image sampling unit arranged to sample the said image(s) and to form images of successive transverse rectangular areas of said textile fabric or the like,

  - an analog-to-digital converter (17) is provided for digitizing the output signals of said light sensitive sensor(s) (16), and

  - the vision computer (20) or the like is equipped with a frame memory (23) in which the ditigized image is stored and with a processor unit (24) arranged to process the digitized image, in accordance with the perfomed method.

17. Apparatus according to claim 16,
**characterized in that**
the vision computer (20) incorporates digital signal processors, preferably arranged in parallel structure.

18. Apparatus according to any one of claims 16 and 17,
**characterized in that**
the light sensitive sensor (16) is comprised of an array of photoelements, for example a high speed line camera with high resolution.

19. Apparatus according to any one of claims 16 to 18,
    **characterized in that**
    the video signal delivered by the light sensitive sensor (16) is transmitted by way of optical fibers to a video receiver (22) incorporated by the vision computer (20), the optical system (6) forming the real image of the fabric or cloth consisting of a photographic lens device.

20. Apparatus according to any one of claims 16 to 19,
    **characterized in that**
    it comprises several sets of optical systems/light sensitive sensors, arranged side by side or situated on opposite sides of the moving fabric, cloth or the like.

21. Stenter machine or similar construction for the treatment of a textile fabric or the like,
    **characterized in that**
    it incorporates an apparatus according to any one of claims 16 to 19, forming the detection, control and driving device of said stenter machine or similar construction for the treatment of a textile fabric or the like.

**Patentansprüche**

1. Verfahren zur Bestimmung der Verzerrungswinkel einer sich bewegenden Textilie, textilen Flächengebildes, Stoffes oder dergleichen, welches die folgenden Schritte umfaßt:

   - Erzeugen eines realen Bildes der Textilie, textilen Flächengebildes oder Stoffes, welches bzw. welcher durch wenigstens eine Lichtquelle beleuchtet ist,

   - Entnahme von Proben des Bildes quer zu der Bewegungsrichtung der Textilie, textilen Flächengebildes, Stoffes oder dergleichen, um Bilder von aufeinanderfolgenden rechteckförmig gestalteten Bereichen zu bilden.

   - Digitalisieren und Abspeichern der entsprechenden Bildsignale,

   - Aufteilen der Bilder in rechteckförmige Bildelemente (10),

   - Anschließendes Berechnen der örtlichen Verzerrungswinkel für die Bildelemente (10) mit Hilfe einer zweidimensionalen Bildtransformation von wenigstens einem Teil der zuvor genannten Bildelemente (10), und

   - Bestimmen der Schräge- und Biege-Verzerrungswinkel der Textilie, textilen Flächengebildes, Stoffes oder dergleichen aus den örtlichen Verzerrungswinkeln, die für jedes der Bildelemente (10) berechnet wurden.

2. Verfahren nach Anspruch 1,
   wobei die Bildelemente gleichmäßig über die gesamte Breite der Textilie oder des textilen Flächengebildes verteilt sind.

3. Verfahren nach einem der Ansprüche 1 und 2,
   wobei die Bildelemente zueinander benachbart sind und zusammen ein kontinuierliches Bild eines quer verlaufenden rechteckförmigen Bereiches des Stoffes oder textilen Flächengebildes oder dergleichen bilden.

4. Verfahren nach Anspruch 1,
   wobei die Bildelemente irregulär über die Breite des Stoffes, textilen Flächengebildes oder dergleichen verteilt und dichter beieinander, möglicherweise benachbart in vorbestimmten oder dynamisch bestimmten Querpositionen sind, entsprechend den Längsbereichen des Stoffes oder Textilerzeugnisses wo größere oder spezielle Verzerrungen erwartet werden.

5. Verfahren nach einem der Ansprüche 1 bis 4,
   wobei eine Bildverstärkung vor der maßstabsgerechten Darstellung der Struktur durchgeführt wird und zwar in Form einer Linienfaltung, einer Laplace'schen oder räumlichen Hochpaß-Frequenzfilterung.

**6.** Verfahren nach einem der Ansprüche 1 bis 5,
wobei während der örtlichen Winkelberechnung und der Berechnung der Schräge-und Biege-Verzerrungswinkel von einem rechteckförmig gestalteten sich quer erstreckenden Bereich des textilen Flächengebildes oder Stoffes, das Bild des nachfolgenden benachbarten ähnlich rechteckförmig gestalteten Bereichs des Stoffes oder textilen Flächengebildes abgetastet, digitalisiert und abgespeichert wird.

**7.** Verfahren nach einem der Ansprüche 1 bis 6,
wobei die verwendete Bildtransformation für jedes Bildelement aus einer Spektraltransformation besteht, wobei die örtlichen Verzerrungswinkel durch eine Regression erster Ordnung, möglicherweise nach einer Raum-Frequenzfilterung geschätzt werden.

**8.** Verfahren nach Anspruch 7,
wobei nach einer möglichen Bildverstärkungsverarbeitung ein zweidimensionales Energiespektrum auf dem Wege der zweidimensionalen Spektraltransformation erhalten wird und die Stellen, welche die Schußtextur wiedergeben, mit dem Zentrum des Bezugssystems unter Verwendung der Linienregression verbunden werden, um den örtlichen Verzerrungswinkel zu definieren.

**9.** Verfahren nach einem der Ansprüche 7 und 8,
wobei die zweidimensionale Transformation eine zweidimensionale Fouriertransformation ist.

**10.** Verfahren nach einem der Ansprüche 1 bis 6,
wobei die verwendete Bildtransformation für jedes Bildelement aus einer räumlichen Polartransformation besteht, wobei die örtlichen Verzerrungswinkel in der räumlichen Polardomäne mit Hilfe einer Maximum- oder Schwerpunktberechnung, bevorzugt nach der Tiefpaß-Frequenzfilterung berechnet werden.

**11.** Verfahren nach Anspruch 10,
wobei nach der möglichen Bildverstärkungsverarbeitung die Raumposition der Schußstruktur in jedem Bildelement unter Verwendung eines Zeilendetektors extrahiert wird, indem die Grauwerte entlang halber Abtastzeilen mit unterschiedlichen Orientierungen ($\Theta i$) innerhalb einer Winkelzone integriert werden und dann ein Textursignal gebildet wird, welches aus unterschiedlichen mittleren Grauwerten für jede Orientierung ($\Theta i$) besteht und die Einhüllende und/oder die Varianz dieses Signals zusammen mit dem entsprechenden Maximum oder Schwerpunkt definiert wird bzw. werden, welches bzw. welcher die Position der Schußtextur an dem in Betracht gezogenen Bildelement anzeigt.

**12.** Verfahren nach Anspruch 11,
wobei die Integration der zuvor genannten Grauwerte und die Ausbildung des Textursignals unter Verwendung einer angepaßten Hough-Transformation ausgearbeitet werden.

**13.** Verfahren nach einem der Ansprüche 11 und 12,
wobei die Einhüllende des Textursignals unter Verwendung eines Differential-Tiefpaß-Digitalfilters abgetastet wird bevor der Schwerpunkt mittels Berechnung der Spektral-Domäne bestimmt wird.

**14.** Verfahren nach einem der Ansprüche 10 bis 13,
wobei ein Zählen der Maxima über die gesamte Breite oder Weite des textilen Flächengebildes oder Stoffes oder innerhalb einer vorbestimmten quer verlaufenden Länge durchgeführt wird, indem beispielsweise das Textursignal durch ein Hochpaß-Digitalfilter gefiltert wird und dann das gefilterte Signal durch einen Periodenzähler hindurch geleitet wird.

**15.** Verfahren nach einem der Ansprüche 1 bis 14,
wobei eine konstante Auflösung in der laufenden Richtung der Textilie, des textilen Flächengebildes oder Stoffes unabhängig von der Bewegungsgeschwindigkeit des letzteren durch Verwendung einer Längen- oder Raummeßkodiereinrichtung aufrecht erhalten wird.

**16.** Vorrichtung, die vorgesehen ist, um das Verfahren gemäß einem der Ansprüche 1 bis 15 durchzuführen, die folgendes aufweist:

- eine Beleuchtungseinrichtung zum Beleuchten der Textilie, des textilen Flächengebildes oder dergleichen,
- wenigstens ein optisches System (6), welches jeweils ein Bild der Textilie, des textilen Flächengebildes oder

EP 0 741 290 B1

dergleichen erzeugt,

- wenigstens einen lichtempfindlichen Sensor (16), und
- einen Bildcomputer (20) oder dergleichen,

dadurch **gekennzeichnet,** daß

- der lichtempfindliche Sensor (16) eine Bildabtasteinheit ist, die vorgesehen ist, das Bild oder die Bilder abzutasten und um Bilder von aufeinanderfolgenden quer verlaufenden rechteckförmigen Bereichen der Textilie, des textilen Flächengebildes oder dergleichen zu erzeugen,

- ein Analog-Digital-Wandler (17) vorgesehen ist, um die Ausgangssignale des lichtempfindlichen Sensors oder der lichtempfindlichen Sensoren (16) zu digitalisieren, und

- der Bildcomputer (20) oder dergleichen mit einem Bildspeicher (23), in welchem das digitale Bild abgespeichert ist, und mit einer Prozessoreinheit (24) ausgerüstet ist, die vorgesehen ist, um das digitalisierte Bild in Einklang mit dem durchgeführten Verfahren, zu verarbeiten.

**17.** Gerät nach Anspruch 16,
dadurch **gekennzeichnet,** daß
der Bildcomputer (20) digitale Signalprozessoren beinhaltet, die in bevorzugter Weise in einer parallelen Struktur angeordnet sind.

**18.** Gerät nach einem der Ansprüche 16 und 17,
dadurch **gekennzeichnet,** daß
der lichtempfindliche Sensor (16) aus einem Array von Photoelementen besteht, beispielsweise einer Hochgeschwindigkeits-Zeilenkamera mit hoher Auflösung.

**19.** Gerät nach einem der Ansprüche 16 bis 18,
dadurch **gekennzeichnet,** daß
das von dem lichtempfindlichen Sensor (16) gelieferte Videosignal über optische Fasern zu einem Videoempfänger (22) übertragen wird, der in dem Bildcomputer (20) enthalten ist, wobei das optische System (6), welches das reale Bild des textilen Flächengebildes oder Stoffes erzeugt, aus einer fotografischen Linsenvorrichtung besteht.

**20.** Gerät nach einem der Ansprüche 16 bis 19,
dadurch **gekennzeichnet,** daß
es mehrere Sätze von optischen Systemen/lichtempfindlichen Sensoren umfaßt, die Seite an Seite angeordnet sind oder die auf sich gegenüberliegenden Seiten des sich bewegenden textilen Flächengebildes, Stoffes oder dergleichen angeordnet sind.

**21.** Spannmaschine oder ähnliche Konstruktion für die Behandlung einer Textilie, textilen Flächengebildes, Stoffes oder dergleichen,
dadurch **gekennzeichnet,** daß
sie eine Vorrichtung gemäß einem der Ansprüche 16 bis 19 enthält, welche die Detektions-, Steuerungs- und Antriebs-Vorrichtung der Spannmaschine oder ähnlichen Konstruktion für die Behandlung einer Textilie, textilen Flächengebildes, Stoffes oder dergleichen bildet.

**Revendications**

**1.** Procédé pour déterminer les angles de déformation d'un tissu ou étoffe textile ou l'analogue en mouvement, qui comprend les étapes suivantes :

- former une image réelle du tissu ou étoffe textile éclairé par au moins une source de lumière ;
- échantillonner ladite image pour former des images de zones rectangulaires successives, transversalement à la direction du mouvement du tissu ou étoffe textile ou l'analogue ;
- numériser et stocker les signaux d'image correspondants ;
- diviser lesdites images en tuiles de forme rectangulaire (10) ;
- calculer ensuite pour lesdites tuiles (10) les angles de déformation locaux au moyen d'une transformation d'image bidimensionnelle d'au moins une partie des tuiles précitées (10) ; et

- déterminer des angles de déformation en oblique et en arc du tissu ou étoffe textile ou l'analogue à partir des angles de déformation locaux calculés pour chacune desdites tuiles (10).

2. Procédé selon la revendication 1, dans lequel lesdites tuiles sont régulièrement distribuées sur toute la largeur du tissu textile.

3. Procédé selon l'une quelconque des revendications 1 et 2, dans lequel lesdites tuiles sont adjacentes les unes aux autres et forment ensemble une image continue d'une zone rectangulaire transversale du tissu, étoffe ou analogue.

4. Procédé selon la revendication 1, dans lequel lesdites tuiles sont irrégulièrement distribuées sur la largeur du tissu, étoffe ou analogue et sont plus proches les unes des autres, éventuellement adjacentes, dans des positions transversales prédéterminées ou dynamiquement déterminées correspondant à des zones longitudinales du tissu ou étoffe dans lesquelles on s'attend à des déformations plus grandes ou particulières.

5. Procédé selon l'une quelconque des revendications 1 à 4, dans lequel on procède à un agrandissement des images avant modélisation de la structure, sous la forme d'une convolution linéaire, un filtrage laplacien ou passe-haut de fréquence spatiale.

6. Procédé selon l'une quelconque des revendications 1 à 5, dans lequel, pendant le calcul des angles locaux et le calcul des angles de déformation en oblique et en arc, d'une zone transversale rectangulaire du tissu ou étoffe, l'image de la zone rectangulaire semblable adjacente suivante du tissu ou étoffe est échantillonnée, numérisée et stockée.

7. Procédé selon l'une quelconque des revendications 1 à 6, dans lequel la transformation d'images utilisée pour chaque tuile consiste en une transformation spectrale, les angles de déformation locaux étant estimés par une régression du premier ordre, éventuellement après un filtrage de fréquence spatiale.

8. Procédé selon la revendication 7, dans lequel, après un traitement éventuel d'agrandissement des images, on obtient un spectre de puissance bidimensionnel au moyen d'une transformation spectrale bidimensionnelle et les points représentant la texture de la trame sont reliés au centre du référentiel en utilisant une régression linéaire, afin de définir l'angle de déformation local.

9. Procédé selon l'une quelconque des revendications 7 et 8, dans lequel la transformation bidimensionnelle est une transformation de Fourier bidimensionnelle.

10. Procédé selon l'une quelconque des revendications 1 à 6, dans lequel la transformation d'images utilisée pour chaque tuile consiste en une transformation polaire spatiale, les angles de déformation locaux étant calculés dans le domaine polaire spatial par un calcul de maximum ou de barycentre, de préférence après un filtrage passe-bas de fréquence.

11. Procédé selon la revendication 10, dans lequel, après un éventuel traitement d'agrandissement des images, la position spatiale de la structure de la trame, dans chaque tuile, est extraite en utilisant un détecteur de lignes, en intégrant les niveaux de gris le long de demi-lignes de balayage avec différentes orientations ($\Theta_i$) à l'intérieur d'une région angulaire, et en formant ensuite un signal de texture constitué par les différents niveaux de gris moyens pour chaque orientation ($\theta_i$) et en définissant l'enveloppe et/ou la variance de ce signal avec le maximum ou le barycentre correspondant qui indique la position de la texture de la trame sur la tuile considérée.

12. Procédé selon la revendication 11, dans lequel l'intégration des niveaux de gris précités et la formation du signal de texture s'effectuent en utilisant une transformation de Hough adaptée.

13. Procédé selon l'une quelconque des revendications 11 et 12, dans lequel l'enveloppe du signal de texture est échantillonnée en utilisant un filtre numérique passe-bas différentiel, avant détermination du barycentre par un calcul dans le domaine spectral.

14. Procédé selon l'une quelconque des revendications 10 à 13, dans lequel on effectue un comptage des maxima sur toute la largeur du tissu ou étoffe ou à l'intérieur d'une longueur transversale prédéterminée, par exemple en filtrant le signal de texture par un filtre numérique passe-haut et en passant ensuite le signal filtré à travers un compteur de périodes.

15. Procédé selon l'une quelconque des revendications 1 à 14, dans lequel on maintient une résolution constante dans la direction du mouvement du tissu ou étoffe textile, indépendamment de la vitesse de déplacement de celui-ci, en utilisant un codeur de mesure de longueurs ou d'espaces.

16. Appareil conçu pour mettre en oeuvre le procédé selon l'une quelconque des revendications 1 à 15, comprenant des moyens d'éclairage pour éclairer le tissu textile ou l'analogue, au moins un système optique (6) formant chacun une image du tissu textile ou analogue, au moins un détecteur photosensible (16) et un calculateur d'images (20) ou l'analogue, caractérisé en ce que :

   - le détecteur photosensible (15) est une unité d'échantillonnage d'images conçue pour échantillonner ladite (lesdites) image(s) et pour former des images de zones rectangulaires transversales successives dudit tissu textile ou l'analogue ;
   - il est prévu un convertisseur analogique/numérique (17) pour numériser les signaux de sortie dudit (desdits) photodétecteur(s) (16), et
   - le calculateur d'images (20) ou l'analogue est équipé d'une mémoire d'images (23) dans laquelle l'image numérisée est stockée et d'une unité de processeur (24) conçue pour traiter l'image numérisée en fonction du procédé mis en oeuvre.

17. Appareil selon la revendication 16, caractérisé en ce que le calculateur d'images (20) incorpore des processeurs de signaux numériques, disposés de préférence en une structure parallèle.

18. Appareil selon l'une quelconque des revendications 16 et 17, caractérisé en ce que le détecteur photosensible (16) est constitué par un réseau de cellules photo-électriques, par exemple une caméra linéaire à grande vitesse et à résolution élevée.

19. Appareil selon l'une quelconque des revendications 16 à 18, caractérisé en ce que le signal vidéo fourni par le détecteur photosensible (16) est transmis par des filtres optiques à un récepteur vidéo (22) incorporé dans le calculateur d'images (20), le système optique (6) formant l'image réelle du tissu ou étoffe consistant en un dispositif d'objectif photographique.

20. Appareil selon l'une quelconque des revendications 16 à 19, caractérisé en ce qu'il comprend plusieurs jeux de systèmes optiques/détecteurs photosensibles, disposés côte à côte ou situés sur les côtés opposés du tissu, étoffe ou l'analogue en mouvement.

21. Métier élargisseur ou structure similaire pour le traitement d'un tissu textile ou l'analogue, caractérisé en ce qu'il incorpore un appareil selon l'une quelconque des revendications 16 à 19, formant le dispositif de détection, de commande et de pilotage dudit métier élargisseur ou de la structure similaire pour le traitement d'un tissu textile ou l'analogue.

FIG.1

FIG.2

FIG. 3

FIG.4

```
                                                    30
    ┌─────────────────────────────────┐
    │    INPUT FABRIC IMAGE           │
    └─────────────────────────────────┘
                    │
                    ▼                   31
    ┌─────────────────────────────────┐
    │  SUBDIVISE IMAGE INTO           │
    │  REGIONS OF INTEREST            │
    └─────────────────────────────────┘
                    │
                    ▼                   32
    ┌─────────────────────────────────┐
    │  ESTIMATE DISTORSION            │
    │  ON EACH REGION                 │
    └─────────────────────────────────┘
                    │
                    ▼                   33
    ┌─────────────────────────────────┐
    │  COMPUTE SKEW ANGLE             │
    │  COMPUTE BOW ANGLE              │
    └─────────────────────────────────┘
```

FIG. 5

FIG.6

FIG.7

FIG.8

FIG.9

FIG.10

ROI 1    ROI 2    ROI 3    ROI 4    ROI 5

$\alpha_1$    $\alpha_2$    $\alpha_3$    $\alpha_4$    $\alpha_5$

22

FIG. 11

FIG.12

FIG 13